# EUROPÄISCHE PATENTSCHRIFT

(11) **EP 3 351 873 B1**
(45) Veröffentlichungstag und Bekanntmachung des Hinweises auf die Patenterteilung: **21.12.2022**
(21) Anmeldenummer: 18151609.7
(22) Anmeldetag: 15.01.2018
(51) Int. Cl.: F25B 15/00, F25B 15/02, F25D 11/02, F25D 23/00, B62J 7/06, B62J 7/08, B62J 9/21, F25B 17/02, F25B 17/08, F25B 43/04, F25D 11/00

(54) **SORPTIONSKÄLTEVORRICHTUNG**
SORPTION COOLING DEVICE
DISPOSITIF DE REFROIDISSEMENT À SORPTION

(30) Priorität: 20.01.2017 DE 102017101058
(43) Veröffentlichungstag der Anmeldung: 25.07.2018
(73) Patentinhaber: Coolar UG (beschränkte Haftung), 12681 Berlin (DE)
(72) Erfinder: Kühn, Roland Wolfgang, 15732 Eichwalde (DE); Mähne, Kilian, 12157 Berlin (DE); Römer, Julia, 13187 Berlin (DE)
(74) Vertreter: Hertin und Partner Rechts- und Patentanwälte PartG mbB

(56) Entgegenhaltungen:
- FR-A1- 2 530 791
- KR-A- 20010 035 537
- US-A- 2 240 173
- US-A- 2 293 556

## Beschreibung

Im Stand der Technik sind industrielle thermisch angetriebene Absorptions- und Adsorptionskälteanlagen bekannt, welche aktiv über Rückkühlwerke gekühlt werden und bei denen die bereitgestellte Kälte über Pumpen in das zu kühlende System eingebracht wird. Nachteilig an diesen Anlagen ist, dass sowohl die Rückkühlwerke, als auch die Pumpen üblicherweise mit elektrischer Energie, beispielsweise Strom, betrieben werden, so dass ein Betrieb einer solchen Anlage ohne den Anschluss an ein Energieversorgungsnetz oder ohne die sonstige Bereitstellung elektrischer Energie nicht möglich ist.

Bekannt sind darüber hinaus thermisch angetriebene Kleinstkälteanlagen, welche passiv gekühlt werden, so dass für die Rückkühlung keine Energieversorgung erforderlich ist. Allerdings können solche Anlagen nur bei hohen Antriebstemperaturen elektrisch oder durch die Verbrennung von Gas angetrieben werden. Solche Kleinstanlagen können beispielsweise als Hotelkühlschränke eingesetzt werden, wobei vor allem ein Kühlraum gekühlt wird. Diese sogenannten Gasdiffusionsabsorptionskälteanlagen enthalten ein Inertgas, welches Druckunterschiede ausgleicht, aber gleichzeitig den Stofftransport behindert. Zur Förderung der Sorptionslösung wird eine Blasenpumpe eingesetzt, welche thermisch angetrieben wird und zusätzliche thermische Energie für den Betrieb benötigt.

Im Stand der Technik sind Prototypen für Adsorptionskühlschränke bekannt, bei denen der kondensierende Kältemittelstrom teilweise im Verdampfer kondensiert wird, wodurch nachteiligerweise interne Wärmelasten im Kühlraum erzeugt werden. Eine solche Kühlvorrichtung wird zum Beispiel in der DE 10 2005 056 245 offenbart. Gleichzeitig sind hierfür hohe Antriebstemperaturen von 200°C bis 300°C nötig, wie in der EP 1 416 233 beschrieben wird.

Die vorgenannten Kälteanlagen haben gemein, dass der Kondensator oberhalb des Verdampfers angeordnet ist, um das kondensierte Kältemittel per Schwerkraft in den Verdampfer zu fördern. Bei Absorptionskälteanlagen ist außerdem bekannterweise der Desorber oberhalb des Absorbers angeordnet.

Um den Druckunterschied zwischen Kondensator und Verdampfer beziehungsweise Desorber und Absorber abzubauen, ist bei einer Vielzahl von konventionellen Kühlanlagen eine Drosseleinrichtung vorgesehen. In günstigen Kompressionskälteanlagen, wie Kühlschränken, werden Kapillarrohre als Drossel eingesetzt, die in dem engen Querschnitt durch Druckverluste die Druckenergie abbauen. In industriellen Kompressionskälteanlagen gibt es automatische Expansionsventile, welche anhand von Druck- oder Temperaturdifferenzen geregelt werden, aber deutlich teurer als ein Kapillarrohr sind. In Sorptionskälteanlagen werden typischerweise lange U-Rohre verwendet.

Abweichend davon wird bei Adsorptionskühlschränken ein üblicherweise vollständig verbundenes System von Rohren und maximal einem Ventil verwendet, in welchem an allen Orten innerhalb des Systems ungefähr derselbe Druck herrscht, wodurch solche Adsorptionskühlschränke aus Verdampfer, Kondensator und Sorptionskammer ganzheitlich zum Austreiben/Kondensieren beziehungsweise Verdampfen/Adsorbieren verwendet werden. Dadurch müssen diese bekannten Systeme zyklisch vollständig abgekühlt und aufgewärmt werden, wodurch nachteiligerweise ein zusätzlicher Energieverbrauch entsteht. Außerdem wird Kältemittel durch diese Bauart nachteiligerweise immer auch im Verdampfer kondensiert und damit zeitweise zusammen mit dem Verdampfer der Kühlraum aufgewärmt, da in diesem Zeitraum insbesondere noch keine neue Kälte im Verdampfer erzeugt werden kann.

Industrielle Absorptions- und Adsorptionskälteanlagen unterscheiden sich stark von Kleinstsorptionskälteanlagen, welche beispielsweise in Kühlschränken eingesetzt werden. Um intern keine verschleißenden und/oder mechanisch bewegten Bauteile, wie Pumpen, einsetzen zu müssen, wird entweder eine Blasenpumpe zur Medienförderung eingesetzt, welche zusätzliche thermische Energie zum Antrieb benötigt, oder ein ortsfestes Adsorbens verwendet. Bei Kleinstadsorptionskälteanlagen wird aufgrund der einfachen Ausführung im Betrieb heißes Kältemittel teilweise im Verdampfer kondensiert, wodurch dem Kühlraum eine zusätzliche Wärmelast auferlegt wird, welche mit einem erhöhten Kühlbedarf einhergeht. Die im Stand der Technik bekannten Kälteanlagen verringern daher deutlich die Effizienz solcher Kleinstkälteanlagen. Gleichzeitig haben die in sowohl industriellen, als auch Kleinstsorptionskälteanlagen eingesetzten U-Rohre zur Druckdrosselung zwischen dem höheren Behälter mit höherem Druck, beispielsweise der Kondensator, und dem niedriger gelegenen Behälter mit niedrigem Druck, beispielsweise der Verdampfer, den Nachteil, dass diese durch Druckstöße oder zufällig entstehende Dampfblasen leer geblasen werden können, wodurch ein direkter Druckrückstoß vom Hochdruckbehälter in den Niederdruckbehälter stattfindet. Dadurch kann nachteiligerweise der Prozess zeitweilig zum Erliegen kommen. Um den Druckrückstoß zu unterbinden, werden häufig zusätzliche Drosselorgane, beispielsweise Lochblenden, eingebaut, welche die Entstehung von Dampfblasensäulen unterbinden oder die Geschwindigkeit des Rückstoßes verringern. Durch diesen zusätzlichen Druckverlust wird die erhöhte Anordnung des Kondensators gegenüber dem Verdampfer unabdingbar, um den Druckverlust sicher zu überwinden. Es ist im Sinne der Erfindung bevorzugt, den nach Stand der Technik höher gelegenen Behälter, der vorzugsweise in seinem Inneren mit einem höheren Druck als der nach Stand der Technik tiefer gelegene Behälter beaufschlagt ist, als Hochdruckbehälter zu bezeichnen, während der nach Stand der Technik tiefer gelegene Behälter, der vorzugsweise in seinem Inneren mit einem niedrigeren Druck als der Hochdruckbehälter beaufschlagt ist, als Niederdruckbehälter bezeichnet wird.

Ein weiterer Nachteil in einigen Anlagen des Standes der Technik besteht darin, dass es bei diesen konventionellen Kälteanlagen nicht möglich ist, im Sumpf des üblicherweise höher gelegenen Kondensators eine Kältemittelmenge vorzuhalten, da der Kondensatorsumpf aufgrund seiner gegenüber dem Verdampfer erhöhten Anordnung innerhalb der Kälteanlage leerlaufen kann, wenn nicht schnell genug weiteres Kältemittel bereitgestellt wird, beispielsweise durch Nachkondensieren. Dieser Nachteil tritt insbesondere dann auf, wenn keine weiteren Ventile oder zusätzlichen Drosseleinrichtungen in der Verbindung zwischen Kondensator und Verdampfer vorgesehen sind, was üblicherweise aber der Fall ist. Wenn als Kältemittel Wasser oder Ethanol oder ein anderes Kältemittel verwendet wird, welches für den Betrieb bei Unterdruck vorgesehen ist, ist durch die entstehenden Dampfblasen die Verwendung eines Kapillar-rohres ebenfalls nicht immer ohne weiteres möglich. Tests haben gezeigt, dass dies insbesondere dann gilt, wenn es sich um Kälteanlagen kleiner Leistung handelt, beispielsweise unterhalb einer Leistung von 1 kW. Dann muss der Querschnitt des Kapillarrohres so klein gewählt werden, dass die damit vorhandenen Kapillarkräfte keine Durchströmung mit flüssigem Kältemittel mithilfe der geringen vorhandenen Druckdifferenz mehr erlauben. Durch die geringe Strömungsgeschwindigkeit des Kältemittels in solch kleinen Anlagen ist auch der Einsatz von Lochblenden nicht möglich, da eine sehr große Anzahl von Lochblenden mit sehr kleinem Querschnitt notwendig wäre, was wirtschaftlich nicht darstellbar ist. Daher wird in bekannten Sorptionskleinstkälteanlagen üblicherweise ein Hilfsgas mit den bekannten Nachteilen verwendet. In den aus dem Stand der Technik bekannten thermisch angetriebenen Kälteanlagen muss der Verdampfer darüber hinaus niedriger, d.h. tiefer, angebracht werden, als der Kondensator, obwohl beispielsweise bei einer direkten Kühlung eines Raumes durch den Verdampfer die optimale Position für den Verdampfer so weit wie möglich oben im Kühlraum ist. Den Verdampfer in solch einem Aufbau möglichst weit oben zu platzieren, stellt dann insbesondere bei geringem Platzangebot eine besondere Herausforderung dar.

Einen höher platzierten Verdampfer enthält beispielsweise die Sorptionskältevorrichtung aus dem Dokument FR2530791A1, welches den nächstliegenden Stand der Technik zu der vorliegenden Erfindung darstellt. Weitere Sorptionskältevorrichtung sind in den Dokumenten KR20010035537A und US2240173A gezeigt.

Demgemäß liegt der Erfindung die Aufgabe zugrunde, eine Sorptionskältevorrichtung bereitzustellen, die eine hohe Energieeffizienz und einen stabilen Betrieb aufweist.

### Beschreibung der Erfindung:

Erfindungsgemäß ist zur Lösung der Aufgabe eine Sorptionskältevorrichtung vorgesehen wie sie im angehängten unabhängigen Anspruch 1 definiert wird.

Es ist im Sinne der Erfindung vorgesehen, wie auch bereits im nächstliegenden Stand der Technik, dass das Verbindungsmittel als primäre Drosseleinrichtung ausgebildet ist. Das bedeutet im Sinne der Erfindung bevorzugt, dass im Kontext der vorgeschlagenen Sorptionskältevorrichtung kein separates Bauteil zum Zweck der Drosselung im Verbindungsmittel zwischen Kondensator und Verdampfer angeordnet vorliegt, sondern das Verbindungsmittel selbst primär die Drosselaufgabe übernimmt.

Mit anderen Worten ist es vorgesehen, dass das Verbindungsmittel eine primäre Drosseleinrichtung darstellt, mit der vorzugsweise der Druck im, vor und nach dem Verbindungsmittel reguliert werden kann.

Ein separates Bauteil im Verbindungsmittel, wie es in einigen Dokumenten des Standes der Technik beschrieben wird, ist mit dem Nachteil verbunden, dass diese bekannten separaten Bauteile zur Drosselung beziehungsweise Druckregulierung hinsichtlich ihres Druckverlusts beziehungsweise hinsichtlich ihres Regelbereichs stark von den Prozessparametern innerhalb der Sorptionskältevorrichtung abhängig sind. Dadurch kann es passieren, dass konventionelle Drosselvorrichtungen, wie Kapillarrohre oder Drosselventile, abseits der zunächst eingestellten Prozessparameter nicht mehr funktionieren oder nicht mehr wunschgemäß betrieben werden können, insbesondere dann, wenn sie in Verbindungsmitteln als separate Bauteile eingesetzt werden. Dies ist insbesondere darauf zurückzuführen, dass sich die Druckdifferenz in einer Sorptionskältevorrichtung vorzugsweise langsam verändert und möglichst konstant gehalten werden soll, während andere Prozessparameter wie beispielsweise der Kältemittelvolumenstrom stark schwanken können. Da die Druckdifferenz in den vorgenannten Drosseleinrichtungen dynamisch, beispielsweise durch den Kältemittelvolumenstrom, aufgebaut wird, können daraus starke unerwünschte Schwankungen des Differenz-druckes resultieren. Dies kann bis zu einem Durchschlag des Hochdrucks in den Niederdruckbehälter führen.

Wenn das Verbindungsmittel selbst als primäre Drosseleinrichtung ausgebildet ist, ist es überraschenderweise möglich, dass diese Drosseleinrichtung vom Volumenstrom, insbesondere vom Kältemittelvolumenstrom, unabhängig den notwendigen Druckverlust herbeiführt, wobei dies vorzugsweise statisch erfolgt. Darüber hinaus besitzt die vorgeschlagene Drossel vorteilhafterweise einen festen Selbstregelbereich, der vorzugsweise durch andere Prozessparameter in vorgegebenem Maße zu einem optimalen Betrieb der Sorptionskältevorrichtung führt, ohne dass es hierbei zu Einschränkungen hinsichtlich der Prozessparameter kommt.

Es ist im Sinne der Erfindung ferner bevorzugt, dass die Sorptionskammer strömungstechnisch im Wesentlichen unmittelbar zwischen dem Austritt aus dem Verdampfer und dem Eintritt in den Kondensator angeordnet vorliegt. Das bedeutet im Sinne der Erfindung vorzugsweise, dass zwischen Verdampfer und Kondensator bevorzugt lediglich Rohrleitungen und die Sorptionskammer angeordnet vorliegen, aber keine weiteren Bauteile. Dieses Merkmal kann im Sinne der Erfindung vorzugsweise auch als "direkte Anbindung der Sorptionskammer" bezeichnet werden. Es ist darüber hinaus bevorzugt, dass die Sorptionskältevorrichtung ohne Pumpen betreibbar ist. Ein Betrieb ohne zusätzliche Pumpen ist deswegen vorteilhaft, wie bereits im nächstliegenden Stand der Technik, weil dadurch der Wartungsaufwand für die Sorptionskältevorrichtung reduziert werden kann. Ferner kann auf diese Weise auch der Energieverbrauch, insbesondere der elektrische Energieverbrauch, für den Betrieb der Sorptionskältevorrichtung reduziert oder niedrig gehalten werden, was die Gesamtenergieeffizienz der Sorptionskältevorrichtung positiv beeinflusst.

Es stellt einen wesentlichen Verdienst der Erfindung dar, dass die Sorptionskältevorrichtung energieeffizient betrieben werden kann und gleichzeitig ein Druckdurchschlag effektiv vermieden werden kann. Dieser Vorteil wird insbesondere durch die Kombination der Merkmale, dass der Kondensator innerhalb der Sorptionskältevorrichtung tiefer angeordnet ist als der Verdampfer in Verbindung mit der Ausgestaltung des Verbindungsmittels und insbesondere mit dem Merkmal, dass das Verbindungsmittel ohne zusätzliches Bauteil zur Druckregulierung auskommt, sowie die beanspruchte Länge der Steigleitung und den Höhenunterschied zwischen Kondensatoraustritt und Verdampfereintritt erreicht. Diese Kombination der Merkmale stellt für den durchschnittlichen Fachmann eine Abkehr vom Stand der Technik dar. Bisher musste der durchschnittliche Fachmann davon ausgehen, dass, insbesondere bei der Verwendung von Wasser, Ethanol oder Methanol als Kältemittel, zusätzlich zur Druckdifferenz zwischen Hochdruck- und Niederdruckbehälter noch ein zusätzlicher Druck aufgebaut werden muss, um sicher eine Durchströmung der in einigen Anlagen vorhandenen Drosseleinrichtung zwischen dem Hochdruck- und Niederdruckbehälter zu ermöglichen, was bisher beispielsweise durch eine Anordnung des Kondensators oberhalb des Verdampfers oder eine Pumpe realisiert wurde. Der zusätzliche Druck, mit dem die Durchströmung der Drosseleinrichtung ermöglicht wird, fungiert dabei vorzugsweise als "Schiebedruck" oder als "Schubdruck".

Die Sorptionskälteanlage besteht mindestens aus den Komponenten, wie sie im angehängten unabhängigen Anspruch 1 definiert sind.

Die Begriffe "Austritt" und "Eintritt" beschreiben im Sinne der Erfindung Öffnungen in den jeweiligen Bauteilen oder Komponenten der Sorptionskälteanlage, in die ein Verbindungsmittel einmündet. Es ist im Sinne der Erfindung bevorzugt, die Begriffe "Eintritt" und "Einlass" beziehungsweise "Austritt" und "Auslass" synonym zu verwenden. Es ist im Sinne der Erfindung des Weiteren bevorzugt, die Begriffe "Sorptionskälteanlage" und "Sorptionskältevorrichtung" synonym zu verwenden.

Die Begriffe "Austritt" und "Eintritt" definieren auch eine Richtung, in der sich das Kältemittel innerhalb der Sorptionskälteanlage bewegt. Es ist im Sinne der Erfindung, wenn das Kältemittel vom Verdampfer zur Sorptionskammer, von der Sorptionskammer zum Kondensator, vom Kondensator in das Verbindungsmittel, welches von einem U-Rohr gebildet werden kann, und vom Verbindungsmittel zurück in den Verdampfer strömt, wodurch vorteilhafterweise ein Kreislauf gebildet wird. Strömungstechnisch führt der Austritt aus dem Verdampfer in die Sorptionskammer, von der Sorptionskammer geht der Dampf in den Kondensator und vom Kondensator geht die Flüssigkeit in das Verbindungsmittel und von da wieder zurück in den Eingang des Verdampfers.

Der Begriff "Austritt aus dem Kondensator" beschreibt eine Öffnung bevorzugt in einem unteren Bereich in einem Kondensator einer Sorptionskälteanlage, aus dem das Kältemittel üblicherweise und bei normalem Betrieb der Sorptionskälteanlage herausfließt, um in ein Verbindungsmittel zu gelangen. Dabei kann es im Sinne der Erfindung sowohl bevorzugt sein, dass die bevorzugt als Austritt bezeichnete Öffnung nach unten gerichtet ist, als auch, dass sie einen seitlichen Ausgang des Kondensators bildet. Als "Eintritt in den Verdampfer" wird eine Öffnung in einem oberen Bereich eines Verdampfers in einer Sorptionskälteanlage bezeichnet, in die das Verbindungsmittel, das erfindungsgemäß zwischen Kondensator und Verdampfer vorgesehen ist, einmündet. Durch diese als Eintritt bezeichnete Öffnung im bevorzugt oberen Bereich des Verdampfers fließt bevorzugt das Kältemittel, das sich im Verbindungsmittel befindet und aus Richtung des Kondensatoraustritts kommt. Der Eintritt in den Verdampfer kann vorzugsweise auch von unten oder in der Mitte erfolgen.

Es ist im Sinne der Erfindung vorgesehen, die genannten Komponenten so anzuordnen, dass ein Austritt aus dem Kondensator niedriger gelegen ist als ein Eintritt in den Verdampfer.

Eine tiefergelegene Komponente der Kälteanlage weist einen kürzeren Abstand zu einer Aufstellungsebene, beispielsweise dem Raumboden, aufweist. Eine höhergelegene Komponente der Kälteanlage weist dahingegen bevorzugt einen geringeren Abstand zum oberen Abschluss der Kälteanlage auf.

Es ist in der Erfindung vorgesehen, dass der Hochdruckbehälter innerhalb der Sorptionsvorrichtung ganz oder teilweise tiefer angeordnet vorliegt als der Niederdruckbehälter. Mit anderen Worten ist es im Sinne der Erfindung bevorzugt, dass der Kondensator innerhalb der Sorptionskältevorrichtung tiefer angeordnet ist als der Verdampfer. Außerdem ist es in der Erfindung vorgesehen, dass das Verbindungsmittel als Drosseleinrichtung ausgebildet ist. Dadurch wird es vorteilhafterweise ermöglicht, dass die Sorptionskältevorrichtung ohne Pumpen betreibbar ist. Ein besonderer Vorteil der vorgeschlagenen Sorptionskältevorrichtung besteht demnach darin, dass die Sorptionskältevorrichtung ohne Pumpen betrieben werden kann. Dadurch kann die Sorptionskältevorrichtung vorteilhafterweise besonders energieeffizient und wartungsarm betrieben werden.

Es ist in der Erfindung vorgesehen, dass sich die Sorptionskammer strömungstechnisch zwischen dem Austritt aus dem Verdampfer und dem Eintritt in den Kondensator befindet. Das bedeutet, dass das Kältemittel, das vom Verdampfer dampfförmig in den Kondensator geführt wird, um dort zu kondensieren, zuerst in der Sorptionskammer sorbiert wird. Es ist im Sinne der Erfindung bevorzugt, dass der Kondensator getrennt von der Sorptionskammer als separater Behälter vorliegt. Das Verbindungsmittel, welches den Auslass aus dem Kondensator mit dem Einlass in den Verdampfer verbindet, liegt bevorzugt ebenfalls getrennt von der Sorptionskammer vor und durchströmt diese in einer besonders bevorzugten Ausführungsform der Erfindung nicht.

Die Flüssigkeit, die in der Sorptionskältevorrichtung zirkuliert, ist ein Kältemittel, dass bevorzugt Wasser oder Ethanol, aber auch Ammoniak oder Methanol sein kann. Der durchschnittliche Fachmann weiß, dass es sich bei Wasser um die chemische Verbindung mit der Summenformel H2O, bei Ethanol um den einwertigen Alkohol mit der Summenformel C2H6O und bei Methanol um den einwertigen Alkohol mit der Summenformel C1H4O und bei Ammoniak um die chemische Verbindung mit der Summenformel NH3 handelt, wobei diese Verbindungen als natürliche Kältemittel in der Natur vorkommen. Ein Kältemittel zeichnet sich dadurch aus, dass das Kältemittel in der Lage ist, Wärmeenergie zu transportieren, wobei bei niedriger Temperatur und niedrigem Druck Wärme aufgenommen und bei höherer Temperatur und höherem Druck Wärme abgegeben wird. Vorteilhaft an der Verwendung von natürlichen Kältemitteln ist, dass diese bei ihrem Einsatz als Arbeitsmedium keine Fluorchlorkohlenwasserstoffe freisetzen und damit nicht zum Abbau der Ozonschicht und zur Förderung des Treibhauseffekts beitragen. In einer bevorzugten Ausführungsform der Erfindung ist das Verbindungsmittel ein U-Rohr. Das Verbindungsmittel bildet gemäß der Erfindung in jedem Fall eine Steigleitung, in der das Kältemittel vom Kondensatoraustritt in Richtung Verdampfereintritt wandert, beziehungsweise innerhalb des Verbindungsmittels hinaufsteigt. Vorzugsweise steht der Kondensator in thermischen Kontakt zur Umgebung der Sorptionskältevorrichtung.

Es ist im Sinne der Erfindung vorgesehen, die Seite des Verbindungsmittels, das dem Kondensator zugewandt ist, als "Kondensatorseite" des Verbindungsmittels zu bezeichnen, während die dem Verdampfer zugewandte Seite des Verbindungsmittels als "Verdampferseite" bezeichnet wird. Diese Bezeichnungen gelten insbesondere auch dann, wenn das Verbindungsmittel von einem U-Rohr gebildet wird, wobei der Schenkel des U-Rohres, welcher im Bereich des Kondensatoraustritts in den Kondensator einmündet, als "Kondensatorseite" oder "Kondensatorschenkel" und der Schenkel des U-Rohres, der im Bereich des Verdampfereintritts in den Verdampfer einmündet, als "Verdampferseite" oder "Verdampferschenkel" des U-Rohres bezeichnet wird.

Es ist im Sinne der Erfindung vorgesehen, dass das Kältemittel aufgrund der erfindungsgemäßen Anordnung des Kondensatoraustritts und des Verdampfereintritts zueinander entgegen der Schwerkraft befördert wird. Dies stellt eine wesentliche Abkehr von einem Teil des Standes der Technik dar, da der Kondensator in einigen bekannten Sorptionskälteanlagen üblicherweise oberhalb eines Verdampfers angeordnet vorliegt, so dass das kondensierte Kältemittel unter Ausnutzung der Schwerkraft vom Kondensator in den Verdampfer gelangen kann. Die Fachwelt war früher zum Teil davon ausgegangen, dass eine alternative Anordnung dieser Komponenten zu keiner oder keiner effizient arbeitenden Sorptionskälteanlage führt. Überraschenderweise ist die erfindungsgemäße Anordnung der Sorptionskältevorrichtung im Zusammenhang mit der erfindungsgemäßen Länge der Steigleitung und dem erfindungsgemäßen Höhenunterschied zwischen dem Auslass aus dem Kondensator und dem Einlass in den Verdampfer mit einer Reihe von Vorteilen verbunden.

Die mit der Erfindung erzielten Vorteile bestehen insbesondere darin, dass das Verbindungsmittel durch unerwünschterweise entstehende Dampfblasen oder Druckstöße nicht mehr vollkommen leer geblasen werden kann. Dies ist bevorzugt darauf zurückzuführen, dass die Dampfblasen erst in der Steigleitung, d.h. bevorzugt auf der Verdampferseite, auf dem Weg vom Kondensator zum Verdampfer entstehen, und zwar vorzugsweise oberhalb eines zum selben Zeitpunkt auf der Kondensatorseite vorherrschenden Füllstandes des Kältemittels im Verbindungsmittel beziehungsweise eines Füllstandes im Kondensator. Da die Füllmenge des Kältemittels in der Steigleitung üblicherweise deutlich kleiner ist, als die verbliebene Kältemittelmenge im Kondensator oder Kondensatorsumpf, führt dies vorteilhafterweise dazu, dass das in der Steigleitung durch aufsteigende Dampfblasen verdrängte Volumen direkt mit dem verbliebenen Kältemittel, welches sich bevorzugt noch im Kondensator und/oder im Kondensatorsumpf befindet und/oder noch in dem Verbindungsmittel vorhanden ist, aufgefüllt werden kann.

Durch die Möglichkeit, das durch die Dampfblasen verdrängte Volumen schnell wieder mit Kältemittel aufzufüllen, wird ein Rückschlag des hohen Drucks, vom Kondensator, in den Behälter mit niedrigem Druck, dem Verdampfer, besonders wirksam vermieden. Gleichzeitig entsteht überraschenderweise ein fest definierter Selbstregelbereich für die Druckminderung, der sich durch die Höhe des Einlasses in das Verbindungsmittel beziehungsweise die Höhe des Füllstandes im Kondensatorsumpf und die Höhe des Auslasses, beziehungsweise durch die Anordnung dieser Komponenten der Sorptionskältevorrichtung zueinander, besonders genau einstellen lässt. Dadurch kann je nach Druckdifferenz zu bevorzugt jedem Betriebszeitpunkt der Sorptionskältevorrichtung ein bestimmtes Flüssigkeitsvolumen im Kondensatorsumpf verbleiben. Es ist im Sinne der Erfindung , dass der Begriff "Druckdifferenz" den Unterschied zwischen den Drücken in den unterschiedlichen Behältern innerhalb der Sorptionskälteanlage beschreibt, beispielsweise den Druckunterschied zwischen den Drücken im Verdampfer und im Kondensator.

Durch die Möglichkeit, dass ein bestimmtes Flüssigkeitsvolumen im Kondensatorsumpf verbleiben kann, wird als weiterer Vorteil der erfindungsgemäßen Anordnung der Verdampfer der Sorptionskältevorrichtung nicht zu stark überflutet. Dadurch wird gewährleistet, dass die Wärmeübertragungsflächen besonders effektiv genutzt werden können und überraschenderweise gleichzeitig ausreichend Dampfraum frei bleibt. Ein weiterer Vorteil besteht darin, dass der verflüssigte Dampf durch das Ansammeln im Sumpf vorteilhafterweise besonders lange im Kondensator verweilt, wodurch die Flüssigkeit stärker abgekühlt werden kann, was zu einem geringeren thermischen Verlust beim Durchströmen des Verbindungsmittels und Einströmen in den Verdampfer führen kann. Insbesondere der im Stand der Technik beschriebene unerwünschte Wärmeeintrag in den Verdampfer durch das warme Kältemittel aus dem Kondensator wird dadurch stark minimiert.

Erfindungsgemäß ist vorgesehen, den Einlass in den Verdampfer im Vergleich zum Auslass aus dem Kondensator erhöht oder höher gelegen anzuordnen. Durch die erfindungsgemäße Anordnung des Verdampfereintritts oberhalb des Kondensatoraustritts lässt sich der vorgegebene Platz innerhalb einer Sorptionskältevorrichtung besonders gut ausnutzen, da insbesondere der Kondensator frei zwischen den anderen Komponenten der Sorptionskältevorrichtung angeordnet werden kann und sich insbesondere nicht mehr oberhalb des Verdampfers befinden muss. Die damit ebenfalls ermöglichte höher gelegene Anbringung des Verdampfers erlaubt insbesondere bei direkter Kühlung eines Raumes mit dem Verdampfer eine bessere Kälteübertragung in den zu kühlenden Raum als dies bei anderen Systemen und/ oder Kälteanlagen, die ohne Pumpen arbeiten, möglich ist. Es war vollkommen überraschend, dass dieser Vorteil auch bei groß ausgeführten Kondensatoren erreicht werden kann.

Es war darüber hinaus überraschend, dass durch die erfindungsgemäße Anordnung der Bestandteile eine Selbsttätigkeit der Sorptionskältevorrichtung gemäß der vorliegenden Erfindung erreicht werden kann. Ein Beispiel dafür ist der Selbstregelbereich, der dadurch entsteht, dass durch den Betrieb des Verbindungsmittels entgegen der Schwerkraft sowohl ein minimaler, als auch ein maximaler Vordruck durch die Geometrie vorgegeben werden kann, während bei konventionellen Sorptionskälteanlagen lediglich die maximale Druckdifferenz zwischen den Behältern für den Betrieb einstellbar ist. Der Selbstregelbereich durch das Verbindungsmittel wird nochmals deutlich verbessert, da dieses durch unerwünschte Dampfblasen oder Druckstöße nicht mehr vollkommen leer geblasen wird und eventuell durch Dampfblasen entstehendes freies Volumen schnell mit Kältemittel aufgefüllt werden kann. Insbesondere ermöglicht die Selbsttätigkeit der Sorptionskältevorrichtung einen Betrieb der Sorptionskältevorrichtung ohne bewegte Verschleißteile, wodurch vorteilhafterweise nicht nur eine lange Lebensdauer der Anlage erreicht wird, sondern auch, dass ein Betrieb der internen Kreisläufe innerhalb der Sorptionskältevorrichtung ohne Pumpen und ohne Strom möglich ist. Gleichzeitig kann die erfindungsgemäße Kälteanlage aus einem Ruhezustand, insbesondere dem ausgeschalteten Zustand, schnell wieder hochgefahren werden, da zu jedem Zeitpunkt des Betriebs Kältemittel im Kondensator verbleibt. In bekannten Kälteanlagen muss üblicherweise erst so lange Wärme zugeführt werden, bis sich der Kondensator wieder mit ausreichend ausgetriebenem Kältemittel gefüllt hat, oder es muss ein Ventil zwischen Kondensator und Verdampfer vorgesehen werden. Letzteres muss entweder manuell oder mit externer Energie geschaltet werden, was im Sinne der Erfindung nicht erwünscht ist.

In der Erfindung sind Abmessungen des Verbindungsmittels in Abhängigkeit von Druckbedingungen innerhalb der Sorptionskältevorrichtung ausgewählt. Es ist im Sinne der Erfindung , dass das Verbindungsmittel Abmessungen aufweist, die in Abhängigkeit von Druckbedingungen innerhalb der Sorptionskältevorrichtung so ausgewählt sind, dass die Sorptionskältevorrichtung optimale Leistung erbringt. Die Länge der Steigleitung des Verbindungsmittels ist, gemäß der Definition der Erfindung im anhängenden unabhängigen Anspruch 1, so ausgewählt, dass der aufgebaute hydrostatische Druck durch das flüssige Kältemittel genau dann der maximalen zu erwartenden Druckdifferenz zwischen Kondensator und Verdampfer entspricht, wenn die Kondensatorseite des Verbindungsmittels im Wesentlichen leer ist.

Außerdem ist gemäß der Definition der Erfindung im anhängenden unabhängigen Anspruch 1 vorgesehen, dass der Höhenunterschied zwischen Auslass aus dem Kondensator und Einlass in den Verdampfer bei einem im Wesentlichen vollkommen gefüllten Verbindungsmittel einen hydrostatischen Druck des Kältemittels ergibt, der der minimalen zu erwartenden Druckdifferenz zwischen Verdampfer und Kondensator im Betrieb entspricht. Dies stellt eine weitere Verbesserung gegenüber dem Stand der Technik dar, in welchem lediglich die maximale Druckdifferenz der Drosseleinrichtung einstellbar war, allerdings keine statische minimale Druckdifferenz zwischen zwei Behältern unterschiedlichen Drucks erhalten werden konnte, was dazu führte, dass sich das Kältemittel, insbesondere im Stillstand der Kälteanlage, nachteiliger Weise immer in einem Behälter angesammelt hat.

In einer Sorptionskälteanlage weist auch die Sorptionskammer einen Austritt auf, der in einer bevorzugten Ausführungsform der Erfindung auf oder oberhalb der Sorptionskammermitte angeordnet ist, d.h. der Sorptionskammeraustritt liegt vorzugsweise auf oder oberhalb einer Mitte der Sorptionskammer angeordnet vor. Dies ist vorteilhaft, da der Dampf nach der Desorption nach oben steigt, wobei dieser Aufwärtsbewegung entgegengewirkt werden müsste, wenn der Austritt in einem unteren Bereich der Sorptionskammer liegen würde. Die bevorzugte Anordnung auf mittlerer Höhe ermöglicht es vorteilhafterweise, die einzelnen Bestandteile der Sorptionskältevorrichtung besonders frei im Raum anordnen zu können.

Zwischen Sorptionskammer und Kondensator beziehungsweise zwischen Verdampfer und Sorptionskammer können in einer weiteren Ausführungsform der Erfindung Ventile angeordnet sein. Es ist im Sinne der Erfindung insbesondere bevorzugt, dass zwischen der Sorptionskammer und dem Kondensator und/oder zwischen dem Verdampfer und der Sorptionskammer mindestens ein Ventil angeordnet vorliegt. Die Ventile verhindern beispielsweise bei Adsorptionskälteanlagen, dass in der Desorptionsphase der Kältemitteldampf in unvorhergesehener Weise direkt dampfförmig zurück in den Verdampfer statt wie gewünscht in den Kondensator strömt und dort kondensiert wird. Es wird außerdem vermieden, dass bereits kondensiertes Kältemittel in der Adsorptionsphase wieder verdampft und vom Kondensator zurück in die Sorptionskammer strömt. Die Ventile können beispielsweise als automatische und/oder druckgetriebene Rückschlagventile, beispielsweise Lippen-Ventile, ausgebildet sein. Dies ist insbesondere deswegen vorteilhaft, um eine im Kontext einer Sorptionskältevorrichtung unerwünschte manuelle und/oder elektrische Bedienung der Ventile zu vermeiden.

Es ist im Sinne der Erfindung bevorzugt, dass die Sorptionskammer, der Verdampfer und der Kondensator separat, d.h. als getrennte Bestandteile der Sorptionskältevorrichtung vorliegen. Insbesondere kann eine Sorptionskältevorrichtung mit mehreren Sorptionskammern auf kleinstem Bauraum bereitgestellt werden, wodurch eine besonders kontinuierliche Bereitstellung von Kälte gewährleistet wird. Dies wird vorteilhafterweise dadurch erreicht, dass mehrere Sorptionskammern mit einem Verdampfer beziehungsweise einem Kondensator betrieben werden können. Die einzelnen Sorptionskammern können zum Beispiel so geschaltet und/oder zeitlich versetzt betrieben werden, dass sich die gegebenenfalls schwankenden Kälteleistungen der einzelnen Kammern zu einer optimalen Gesamtkälteleistung der Gesamtvorrichtung umfassend mehrere Sorptionskammern aufaddieren. Es ist im Sinne der Erfindung gegeben, dass die Sorptionskammer ein Sorptionsmedium umfasst beziehungsweise die Sorptionskammern ein Sorptionsmedium umfassen, in dem die Adsorptions- und/oder Absorptionsprozesse ablaufen.

der Erfindung ist zwischen dem Austritt aus dem Kondensator und dem Verbindungsmittel oder in der Kondensatorseite des Verbindungsmittels ein Kondensatreservoir angeordnet. Es kann im Sinne der Erfindung insbesondere bevorzugt sein, vor dem Einlass in das Verbindungsmittel, das bevorzugt von einem U-Rohr gebildet wird, ein zusätzliches Kondensatreservoir vorzusehen. Dadurch wird, wie auch bereits im Stand der Technik FR2530791A1, ermöglicht, einen möglichst großen Anteil des Kondensatorvolumens, besonders bevorzugt das gesamte Kondensatorvolumen, für den zu verflüssigenden Dampf vorzuhalten und die Flüssigkeit außerhalb des Kondensators vorzuhalten. Diese Ausführungsform hat sich als besonders wirkungsvoll in Verbindung mit solchen Kondensatoren gezeigt, die für reinen Dampf, vorzugsweise Wasserdampf, optimiert sind.

Es ist im Sinne der Erfindung, dass das Kondensatreservoir beispielsweise als zusätzliches Volumen innerhalb des Kondensatorschenkels des Verbindungsmittels ausgebildet wird und/oder unterhalb des Kondensators angeordnet vorliegt. Es ist bevorzugt, dass das Kondensatreservoir im thermischen Kontakt zur Umgebung steht, um die vorzugsweise im Kondensatreservoir gesammelte Flüssigkeit besonders effektiv in einen Temperaturbereich in die Nähe der Umgebungstemperatur abzukühlen. Dies bedeutet bevorzugt, dass die Temperatur der Flüssigkeit im Kondensatreservoir auf die Umgebungstemperatur abgekühlt wird. Der Durchmesser des Kondensatreservoirs sollte bevorzugt 5 cm überschreiten, d.h. größer als 5 cm sein, um eine freie Konvektion und damit eine gute Durchmischung des Kältemittels bei der Abkühlung des Kondensats zu ermöglichen. Geringere Durchmesser sind hierfür ebenfalls möglich, hemmen aber gegebenenfalls die freie Konvektion.

In der Erfindung bildet das Verbindungsmittel eine Steigleitung, wobei vorzugsweise in der Steigleitung ein Kältemittelreservoir angeordnet vorliegt. Es kann im Sinne der Erfindung bevorzugt sein, zur stärkeren Unterbindung des Druckdurchschlags zwischen Kondensator und Verdampfer der Sorptionskältevorrichtung ein Kältemittelreservoir in der Steigleitung des Verbindungsmittels, bevorzugt des U-Rohres, vorzusehen. Es ist insbesondere bevorzugt, wenn das Kältemittelreservoir vor dem Verdampfer angeordnet vorliegt, so dass die möglicherweise entstandenen Dampfblasen durch das Kältemittel strömen können, ohne beispielsweise das gesamte Kältemittel vor sich herzuschieben und damit vollständig aus dem Verbindungsmittel zu drücken. Das im Reservoir befindliche Kältemittel kann in dieser bevorzugten Ausführungsform der Erfindung in das Verbindungsmittel zurückfließen, so dass vorteilhafterweise der notwendige Gegendruck zwischen Kondensator und Verdampfer wiederaufgebaut werden kann.

Es ist im Sinne der Erfindung bevorzugt, dass das Kältemittelreservoir bevorzugt mindestens genau so viel Volumen besitzen wie die Steigleitung ohne Kältemittelreservoir. Mit anderen Worten ist es bevorzugt, dass das Volumen des Kältemittelreservoirs gleich groß oder größer ist als das Volumen, das die Steigleitung allein, d.h. ohne Kältemittelreservoir, aufweist. Das Kältemittelreservoir befindet sich vorzugsweise in der Steigleitung auf Höhe des Auslasses aus dem Kondensator oder darüber. Es ist besonders bevorzugt, dass das Kältemittelreservoir auf einer mittleren Höhe zwischen Kondensatorauslass und Verdampfereinlass angeordnet vorliegt, wobei der Verdampfereinlass vorzugsweise auch den Auslass aus dem Verbindungsmittel bildet.

Wenn das Kältemittel vorzugsweise von unten in den Verdampfer eingebracht wird, kann vorteilhafterweise direkt am Verdampfer eine deutliche Querschnittserweiterung am Ende des Verbindungsmittels erfolgen, welches dann vorzugsweise mit diesem vergrößerten Querschnitt direkt an den Verdampfer angeschlossen wird. Dadurch ergibt sich, beispielsweise wie beim Kältemittelreservoir, die Möglichkeit, die Dampfblasen vorbeiströmen zu lassen, wobei vorteilhafterweise zusätzlich der Verdampfersumpf als Reservoir zum direkten Zurücklaufen von Kältemittel in das Verbindungsmittel zur Verfügung steht.

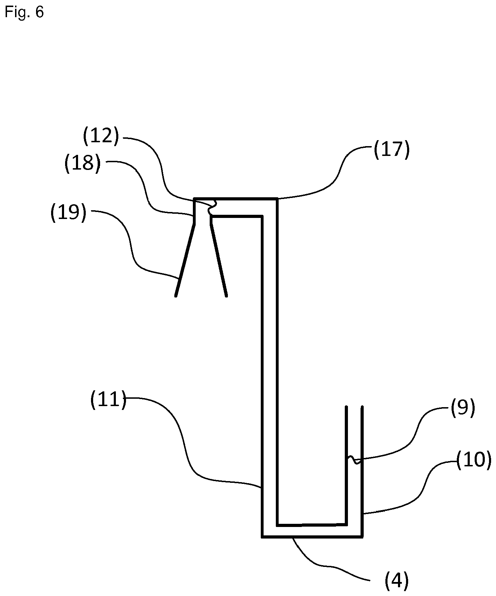

In einer bevorzugten Ausführungsform der Erfindung umfasst das Verbindungsmittel einen lokalen Hochpunkt. Beispielsweise kann das U-Rohr, das als Verbindungsmittel verwendet werden kann, zusätzlich einen lokalen Hochpunkt bevorzugt auf Verdampferseite aufweisen, wodurch vorteilhafterweise ein größerer Maximaldruck durch die Geometrie vorgegeben wird, als erforderlichenfalls durch den alleinigen Höhenunterschied zwischen Kondensatorauslass und Verdampfereinlass möglich wäre. Die Vorsehung eines lokalen Hochpunkts im Bereich des Verbindungsmittels kann außerhalb der Erfindung beispielsweise bevorzugt sein, wenn der Verdampfer nicht oder nicht wesentlich oberhalb des Kondensators platziert werden soll oder innerhalb oder außerhalb der Erfindung, wenn aufgrund hoher Umgebungstemperaturen eine große Druckdifferenz zwischen Verdampfer und Kondensator entstehen muss und damit ein sehr großer Höhenunterschied benötigt wird. Bei dieser Ausführungsform ist vor dem Auslass in den Verdampfer bevorzugt eine Querschnittserweiterung vorgesehen, um sicherzustellen, dass die Auslassleitung frei von Kältemittel ist, damit der mit dieser Ausführungsform maximal mögliche Gegendruck unerwünschterweise nicht verringert wird. Es ist bevorzugt, dass das Verbindungsmittel durch den Eintritt in den Verdampfer hineinragt und das Kältemittel am Ende dieser Leitung herausfließt. Hierzu wird vorgeschlagen, dass sich das Verbindungsmittel ausweitet, d.h. verbreitert, so dass vorzugsweise eine Querschnittserweiterung gebildet wird. Die Querschnittserweiterung kann bevorzugt in Strömungsrichtung direkt hinter der Hochstelle erfolgen. Vom Innenraum des Verdampfers betrachtet kann die Öffnung des Verdampfers, in die das Verbindungsmittel einmündet, als Auslass betrachtet werden, vor dem - von der Innenseite des Verdampfers aus betrachtet - die Querschnittserweiterung des Verbindungsmittels vor diesem Auslass erfolgt. Dieses wird insbesondere in der Figur 6 deutlich.

In einer bevorzugten Ausführungsform der Erfindung umfasst die Sorptionskältevorrichtung ein Abzugsrohr aus dem Verdampfer, wobei das Abzugsrohr und das Verbindungsmittel zumindest abschnittsweise im Wesentlichen parallel zueinander verlaufen. Durch die bevorzugt zumindest abschnittsweise parallele Führung von Verbindungsmittel und Abzugsrohr aus dem Verdampfer ergibt sich vorteilhafterweise ein Kontaktbereich für eine Wärmeübertragung vom Kondensat an den Kältemitteldampf, der sich vorzugsweise bei der Sorption aufwärmt. Diese Ausführungsform ist insbesondere dann bevorzugt, wenn gleichzeitig ein lokaler Hochpunkt im Verbindungsmittel vorgesehen ist. Insbesondere kann durch diese Ausführungsform der Erfindung eine mögliche Überhitzung des Kondensats besonders wirksam abgebaut werden.

In einer bevorzugten Ausführungsform der Erfindung wird die Steigleitung der Verdampferseite des Verbindungsmittels vollständig oder teilweise innerhalb des zu kühlenden Raums, vorzugsweise mit direktem thermischen Kontakt zum zu kühlenden Raum, geführt. Vorzugsweise liegt die Steigleitung auf der Seite des Verdampfers des Verbindungsmittels vollständig oder teilweise innerhalb des Kühlraums angeordnet vor, wobei vorzugsweise ein thermischer Kontakt zwischen dem als Steigleitung ausgebildeten Verbindungsmittel und dem zu kühlenden Raum besteht. Es ist insbesondere bevorzugt, diese Steigleitung innerhalb des Verdampfers zu führen. Es ist im Sinne der Erfindung bevorzugt, die dem Verdampfer zugewandte Seite des Verbindungsmittels, das beispielweise als U-Rohr oder Steigleitung ausgebildet sein kann, als Verdampferseite des Verbindungsmittels zu bezeichnen.

Die vorgeschlagene Anordnung führt vorteilhafterweise zu einer starken Reduzierung der Dampfblasenbildung, da das Kältemittel während der Entspannung beim Aufstieg in der Steigleitung gleichzeitig gekühlt wird und daher nicht überhitzt. Hierdurch kann ein möglicher Druckrückschlag vom Kondensator zum Verdampfer vorteilhafterweise noch effektiver unterbunden werden. Wird das Steigrohr besonders dick ausgebildet, so ist die Strömungsgeschwindigkeit in diesem Rohr besonders langsam und das enthaltene Kältemittel dient dann dem Kühlraum vorteilhafterweise ebenfalls als Kältespeicher. Ist die Steigleitung beispielsweise breiter als 5 cm ausgebildet, so erfolgt eine Vermischung des neu in die Steigleitung einströmenden wärmeren Kältemittels mit dem bereits in der Steigleitung befindlichen kälteren Kältemittel, was zu einer besonders gleichmäßig niedrigen Temperatur in dem Steigleitungsleitungsabschnitt, welcher sich im direkten thermischen Kontakt zum Kühlraum befindet, führt und damit wiederum zu einer noch effektiveren Unterbindung eines möglichen Druckdurchschlags beiträgt.

In einer bevorzugten Ausführungsform der Erfindung umfasst die Sorptionskältevorrichtung eine Gasfalle. Es ist im Sinne der Erfindung bevorzugt, dass an dem bevorzugt höchsten Punkt der Verbindungsleitung zwischen Verdampfer und Sorptionskammer ein Behälter angeordnet wird, der vorzugsweise die Gasfalle bildet. Da die nicht kondensierbaren Gase üblicherweise eine geringere Dichte als der Kältemitteldampf haben, steigen diese nach oben und sammeln sich bevorzugt in der Gasfalle der Sorptionskältevorrichtung. Gase, die schwerer sind als der Kältemitteldampf, werden vorteilhafterweise mit der Strömung nach oben mitgerissen. Im Sinne der Erfindung können nicht kondensierbare Gase bevorzugt durch Ausgasungen, Leckagen und/oder Korrosion entstehen.

Vorteilhafterweise kann ein großer Anteil dieser nicht kondensierbaren Gase bei der Durchströmung der Verbindungsleitung in dem darüber gelegenen Behälter, der bevorzugt die Gasfalle bildet, gesammelt werden. Dies ermöglicht vorteilhafterweise, dass ein großer Anteil der nicht kondensierbaren Gase vom restlichen Prozess ferngehalten wird und diesen nicht behindert. Insbesondere wird dadurch der Stofftransport innerhalb der Sorptionskältevorrichtung nicht gestört. Um zu verhindern, dass die Gasfalle vollständig mit den nicht kondensierbaren Gasen gefüllt ist, wodurch ihre Funktion nicht mehr gewährleistet werden könnte, befindet sich an der Oberseite des Behälters, der vorzugsweise die Gasfalle bildet, eine Abzugsleitung, über welche die nicht kondensierbaren Gase beispielsweise mit einer Vakuumpumpe abgesaugt werden können. Während des normalen Betriebs der Sorptionskältevorrichtung wird die Abzugsleitung vorzugsweise über ein vakuumdichtes Ventil verschlossen. Abweichend davon kann die Gasfalle an einem lokalen Tiefpunkt in der Verbindungsleitung zwischen Verdampfer und Sorptionskammer angeordnet werden, wenn Wasser als Kältemittel verwendet wird, da die meisten Gase eine deutlich höhere Dichte als Wasserdampf aufweisen und sich dann besser in einer tiefergelegenen Gasfalle sammeln lassen. Bei Nutzung einer Gasfalle ist das Ventil, welches sich zwischen Verdampfer und Sorptionskammer befindet, bevorzugt im Bereich zwischen Verdampfer und Gasfalle anzuordnen.

Besonders bevorzugte Ausführungsformen werden in den beigefügten Figuren gezeigt, ohne dass die Erfindung auf diese beschränkt ist. Die Erfindung wird durch den angehängten unabhängigen Anspruch 1 definiert. Es zeigt
- Figur 1: eine nicht erfindungsgemäße, jedoch für deren Verständnis hilfreiche Ausführungsform der Sorptionskälteanlage umfassend mindestens einen Verdampfer, eine Sorptionskammer und einen Kondensator
- Figur 2: eine nicht erfindungsgemäße, jedoch für deren Verständnis hilfreiche Ausführungsform des Verbindungsmittels mit Verdampfer und Kondensator
- Figur 3: eine erfindungsgemäße Ausführungsform der Sorptionskältevorrichtung mit Kondensatreservoir
- Figur 4: eine nicht erfindungsgemäße, jedoch für deren Verständnis hilfreiche Ausführungsform des Verbindungsmittels der Sorptionskältevorrichtung mit Kältemittelreservoir
- Figur 5: eine nicht erfindungsgemäße, jedoch für deren Verständnis hilfreiche Anordnungsform des Verbindungsmittels der Sorptionskältevorrichtung
- Figur 6: eine nicht erfindungsgemäße, jedoch für deren Verständnis hilfreiche Ausführungsform des Verbindungsmittels der Sorptionskältevorrichtung mit Hochpunkt und Querschnittserweiterung vor dem Auslass
- Figur 7: eine nicht erfindungsgemäße, jedoch für deren Verständnis hilfreiche Ausführungsform der Sorptionskältevorrichtung mit paralleler Führung von Verbindungsmittel und Abzugsrohr aus dem Verdampfer bei gleichzeitiger Ausführung eines Hochpunktes im Verbindungsmittel
- Figur 8: eine nicht erfindungsgemäße, jedoch für deren Verständnis hilfreiche Ausführungsform der Sorptionskältevorrichtung mit Gasfalle

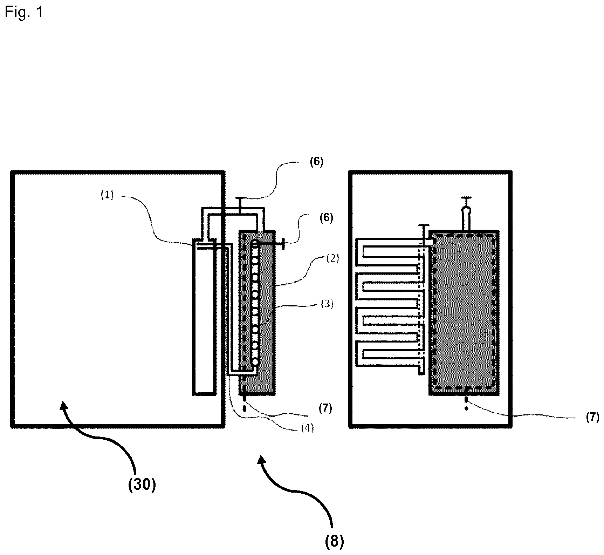

Die Figuren 1-2 und 4-8 zeigen jeweils nicht das Kondensatreservoir, welches, wie durch den anhängenden Anspruch 1 definiert, Teil der Erfindung ist. Dennoch sind sie hilfreich für das Verständnis der Erfindung, da sie einzelne Aspekte der Erfindung zeigen.

Figur 1 zeigt eine nicht erfindungsgemäße, jedoch für deren Verständnis hilfreiche Ausführungsform der Sorptionskälteanlage (8) umfassend mindestens einen Verdampfer (1), mindestens eine Sorptionskammer (2) und mindestens einem Kondensator (3), sowie eine Drossel, welche bevorzugt als U-Rohr ausgeführt ist und ein Verbindungsmittel (4) im Sinne der Erfindung bildet und zwischen dem Verdampfer (1) und dem Kondensator (3) angeordnet vorliegt. Des Weiteren zeigt Figur 1 zwei Ventile (6), wobei eines der Ventile (6) in einem Verbindungsmittel zwischen Verdampfer (1) und Sorptionskammer (2) angeordnet vorliegt. Ein zweites Ventil (6) liegt in einem oberen Bereich des Kondensators angeordnet vor. Die Ventile (6) können als automatische und/oder druckgetriebene Rückschlagventile ausgebildet sein, wodurch keine manuelle oder elektrische Bedienung der Ventile erforderlich ist.

Der mindestens eine Verdampfer (1) steht bevorzugt in direkten räumlichen und thermischen Kontakt mit dem zu kühlenden Raum (30). Der mindestens eine Kondensator (3) und die mindestens eine Sorptionskammer (2) befinden sich bevorzugt vollständig außerhalb des zu kühlenden Raumes (30) und stehen im direkten thermischen Kontakt mit einer Umgebung, an welche Wärme abgegeben werden kann. Es ist notwendig, dass der Sorptionskammer (2) Wärme für die Austreibung des Kältemittels zugeführt wird. Dies kann beispielsweise über eine elektrische Heizung (7), die innerhalb der Sorptionskammer (2) angeordnet ist, erfolgen. In der Sorptionskammer (2) befindet sich ein, bevorzugt ortsfestes, Sorptionsmedium, in dem vorzugsweise die Adsorptions- und/oder Absorptionsprozesse ablaufen.

Der Verdampfer (1) und der Kondensator (3) sind innerhalb der Sorptionskältevorrichtung (8) so anzuordnen, dass ein Austritt aus dem Kondensator (3) niedriger gelegen ist als ein Eintritt in den Verdampfer (1). Figur 1 zeigt des Weiteren, dass die Sorptionskammer (2) strömungstechnisch zwischen dem Austritt aus dem Verdampfer (1) und dem Eintritt in den Kondensator (3) angeordnet vorliegt.

Ein Austritt aus der Sorptionskammer (2) liegt auf oder oberhalb einer Mitte der Sorptionskammer (2). Zwischen dem Austritt aus dem Kondensator (3) und dem Eintritt in den Verdampfer (1) ist ein Verbindungsmittel (4) angeordnet, das vorzugsweise als U-Rohr mit klar definierten Abmaßen ausgebildet sein kann, wobei die Abmessungen des Verbindungsmittels (4), beziehungsweise des U-Rohres in Abhängigkeit vom Druckeinsatzbereich der Sorptionskälteanlage (8) ausgewählt sind. Die Länge einer Steigleitung (11), also bevorzugt der Verdampferseite des U-Rohres, die von dem Verbindungsmittel gebildet wird, entspricht der maximalen zu erwartenden Druckdifferenz zwischen Kondensator (3) und Verdampfer (1) und der Höhenunterschied zwischen dem Auslass aus dem Kondensator (3) und dem Einlass in den Verdampfer (1) entspricht der minimalen zu erwartenden Druckdifferenz zwischen Verdampfer (1) und Kondensator (3) im Betrieb.

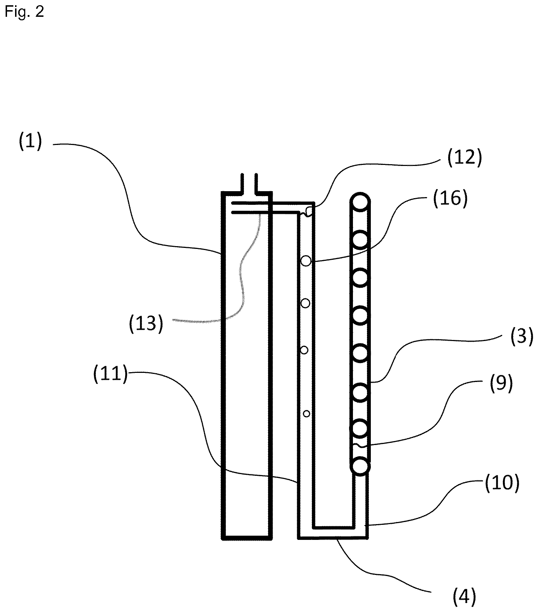

Figur 2 zeigt eine bevorzugte Ausführungsform des Verbindungsmittels (4) mit Verdampfer (1) und Kondensator (3), insbesondere das Verbindungsmittel (4), das als U-Rohr ausgeführt ist. Dargestellt sind die beiden U-Schenkel des U-Rohres, die vorzugsweise als Verdampferschenkel oder Verdampferseite (11) und als Kondensatorschenkel oder Kondensatorseits (10) des Verbindungsmittels (4) bezeichnet werden. Dabei entspricht die Verdampferseite (11) dem Schenkel des U-Rohres, das dem Verdampfer (1) zugewandt ist beziehungsweise diesem am nächsten liegt, während die Kondensatorseite (10) dem Kondensator (3) der Sorptionskältevorrichtung (8) zugewandt ist. Es ist im Sinne der Erfindung, dass die Verdampferseite (11) des U-Rohres, das das Verbindungsmittel (4) bildet, als Steigleitung bezeichnet und mit dem Bezugszeichen (11) bezeichnet wird. Es ist im Sinne der Erfindung ebenfalls vorgesehen, dass die Kondensatorseite (10) des U-Rohres, dass vorzugsweise das Verbindungsmittel (4) bildet, als Fallleitung mit dem Bezugszeichen (10) bezeichnet wird.

Der Verdampfer weist einen Auslass (13) auf, der das Ende des Verbindungsmittels (4) darstellt, der in den Verdampfer (1) hineinragt. In dem Verbindungsmittel (4) liegt eine Flüssigkeit, als ein Kältemittel, vor, dass auf den beiden Seiten des Verbindungsmittels (4) bevorzugt unterschiedliche Füllstände (9 und 12) aufweist. Es ist im Sinne der Erfindung bevorzugt, dass der Füllstand auf der Kondensatorseite (10) des Verbindungsmittels (4) mit dem Bezugszeichen (9) bezeichnet wird und der Füllstand auf der Verdampferseite (11) des Verbindungsmittels (4) mit dem Bezugszeichen (12). Exemplarisch sind auf der Verdampferseite des Verbindungsmittels (11) die Dampfblasen (16) gezeigt, welche dort typischerweise ab einer Steighöhe oberhalb des Kondensatorfüllstandes (9) entstehen können.

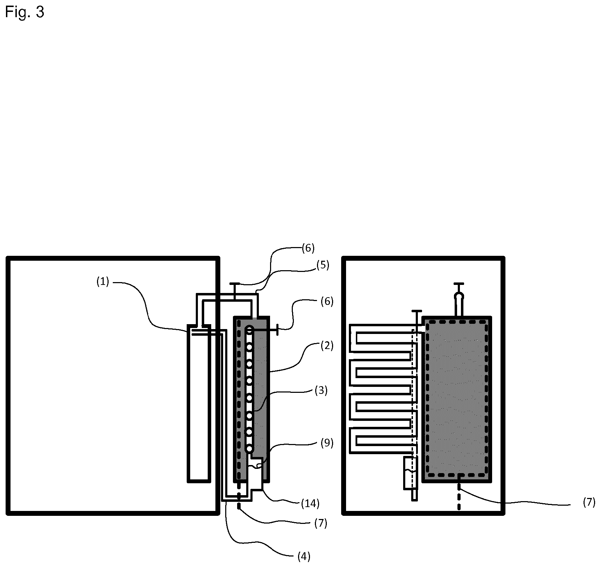

Figur 3 zeigt eine erfindungsgemäße Ausführungsform der Sorptionskältevorrichtung (8) mit Kondensatreservoir (14). Ein zusätzliches Kondensatreservoir (14) kann vorgesehen werden, um das vollständige Volumen des Kondensators (3) für den zu verflüssigenden Dampf vorzuhalten und die Flüssigkeit, bevorzugt das Kältemittel, außerhalb des Kondensators (3) vorzuhalten. Das Kondensatreservoir (14) steht bevorzugt in thermischen Kontakt mit der Umgebung der Sorptionskältevorrichtung (8), um die Flüssigkeit auf Umgebungstemperatur abzukühlen. Figur 3 zeigt darüber hinaus die Ventile (6) in dem Verbindungsmittel zwischen Verdampfer (1) und Sorptionskammer (2) und im oberen Bereich des Kondensators (3), sowie die elektrische Heizung (7), die innerhalb der Sorptionskammer (2) angeordnet vorliegt. Es ist im Sinne der Erfindung bevorzugt, das Verbindungsmittel zwischen Verdampfer (1) und Sorptionskammer (2) als Abzugsrohr (5) zu bezeichnen. Das Bezugszeichen (9) deutet den Füllstand der Flüssigkeit im Kondensatreservoir (14) an.

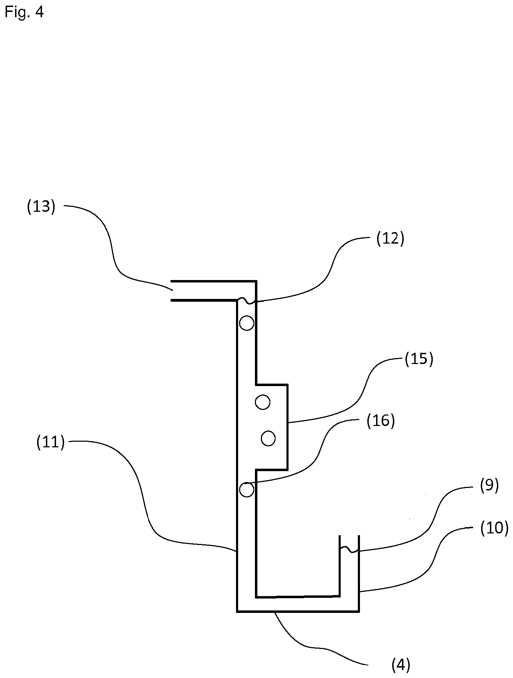

Figur 4 zeigt eine nicht erfindungsgemäße, jedoch für deren Verständnis hilfreiche Ausführungsform des Verbindungsmittels (4) der Sorptionskältevorrichtung (8) mit Kältemittelreservoir (15), insbesondere ein U-Rohr mit Kältemittelreservoir (15). In der in Figur 1 dargestellten Ausführungsform wird das Kältemittelreservoir (15) von einem erweiterten Bereich der Verdampferseite (11) des Verbindungsmittels (4) gebildet. Mit anderen Worten liegt das Kältemittelreservoir (15) innerhalb der Steigleitung (11) vor, die von dem Verbindungsmittel (4) gebildet wird. Das Verbindungsmittel (4) ist mit Kältemittel gefüllt, deren Füllstände (9 und 12) in den beiden Schenkeln (10 und 11) des Verbindungsmittels (4) ebenfalls in Figur 1 dargestellt sind. Das Kältemittelreservoir (15) liegt besonders bevorzugt auf mittlerer Höhe zwischen den beiden Füllständen (9 und 12) vor. In dem Kältemittel können sich Dampfblasen (16) ausbilden, die sich teilweise durch das Kältemittel bewegen können, dieses ohne das Kältemittelreservoir (15) allerdings größtenteils vor sich herschieben würden. Den verdampferseitigen Abschluss des Verbindungsmittels (4) bildet bevorzugt ein Auslass (13).

Das Kältemittelreservoir (15) kann in einer weiteren bevorzugten Ausgestaltung der Erfindung am Ende der Steigleitung (11) vorgesehen sein, wenn das Kältemittel beispielsweise von unten in den Verdampfer (1) eingebracht wird. Dies eröffnet vorteilhafterweise bevorzugt die Möglichkeit, etwaige Dampfblasen (16) vorbeiströmen zu lassen, wobei zusätzlich zum Kältemittelreservoir (15) der Verdampfersumpf als Reservoir zum direkten Zurücklaufen von Kältemittel - vorzugsweise per Schwerkraft - in das U-Rohr (4) zur Verfügung steht, wodurch vorteilhafterweise das Kältemittelreservoir (15) mit einem kleineren Volumen ausgeführt werden kann.

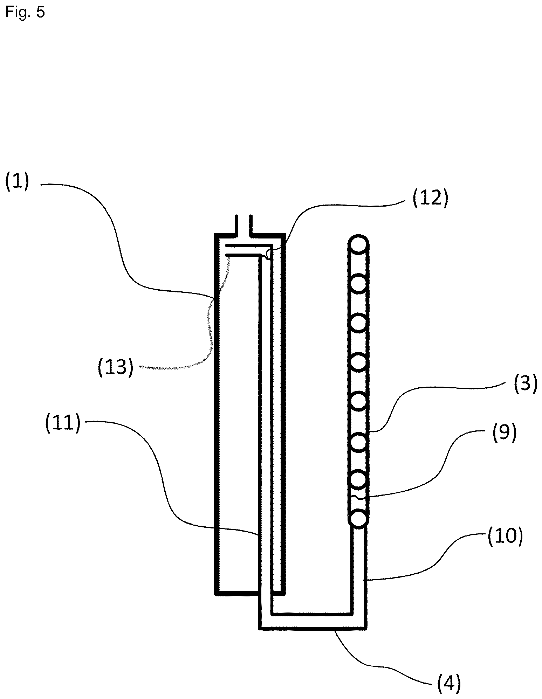

In Figur 5 ist eine nicht erfindungsgemäße, jedoch für deren Verständnis hilfreiche Anordnungsform des Verbindungsmittels (4) der Sorptionskältevorrichtung (8) gezeigt, bei welcher sich ein großer Teil der Steigleitung (11) des Verbindungsmittels (4) innerhalb des Verdampfers (1) befindet. Dargestellt sind auch der andere U-Schenkel, die Kondensatorseite (10) des Verbindungsmittels (4), sowie der Kondensator (3) mit dessen Füllstand (9). Im Gegensatz zu Figur 2 und 4 sind hier in der Steigleitung (11) zwischen Höhe des Füllstandes im Kondensator (9) und Füllstand im Verdampfer (12) keine Dampfblasen (16) vorhanden, da sich das Kältemittel hier im unterkühlten Zustand befindet und somit keine Dampfblasen entstehen können. Dies wird durch die bevorzugte Anordnung der Steigleitung (11) des Verbindungsmittels (4) innerhalb des Verdampfers (1) mit direktem thermischen Kontakt zu dem Verdampfer (1) ermöglicht, wodurch sich bevorzugt in der gesamten Steigleitung innerhalb des Verdampfers (1) im Wesentlichen dieselbe Temperatur einstellt wie am Auslass des Verbindungsmittels (13) und im Verdampfer (1).

Der Verdampfer (1) weist einen Auslass (13) auf, der das Ende des Verbindungsmittels (4) darstellt, der in den Verdampfer (1) hineinragt. In dem Verbindungsmittel (4) liegt eine Flüssigkeit, bevorzugt ein Kältemittel, vor, dass auf den beiden Seiten des Verbindungsmittels (4) bevorzugt unterschiedliche Füllstände (9 und 12) aufweist. Es ist im Sinne der Erfindung bevorzugt, dass der Füllstand auf der Kondensatorseite (10) des Verbindungsmittels (4) mit dem Bezugszeichen (9) bezeichnet wird und der Füllstand auf der Verdampferseite (11) des Verbindungsmittels (4) mit dem Bezugszeichen (12). Exemplarisch sind auf der Verdampferseite des Verbindungsmittels (11) die Dampfblasen (16) gezeigt, welche dort typischerweise ab einer Steighöhe oberhalb des Kondensatorfüllstandes (9) entstehen können.

Figur 6 zeigt eine nicht erfindungsgemäße, jedoch für deren Verständnis hilfreiche Ausführungsform des Verbindungsmittels (4) der Sorptionskältevorrichtung (8) mit lokalem Hochpunkt (17) und Querschnittserweiterung (19) vor dem Auslass (13). Es ist bevorzugt, dass das Verbindungsmittel (4) durch den Eintritt in den Verdampfer (1) hineinragt und sich auch innerhalb des Verdampfers (1) weiter ausweiten kann, d.h. insbesondere verbreitert, so dass vorzugsweise eine Querschnittserweiterung (19) gebildet wird. Es ist besonders bevorzugt, dass die Erweiterung (19) direkt an den Hochpunkt (17) anschließt, d.h. unmittelbar hinter dem Hochpunkt (17) angeordnet vorliegt. Vom Innenraum des Verdampfers (1) betrachtet kann der die Öffnung des Verdampfers (1), in die das Verbindungsmittel (4) einmündet, als Auslass betrachtet werden, vor dem - von der Innenseite des Verdampfers (1) aus betrachtet - die Querschnittserweiterung (19) des Verbindungsmittels (4) vor diesem Auslass erfolgt.

Figur 6 zeigt darüber hinaus einen lokalen Hochpunkt (17) des Verbindungsmittels (4), der bevorzugt im Bereich des Eintritts beziehungsweise vor dem Eintritt des Verbindungsmittels (4) in den Verdampfer (1) angeordnet vorliegt. Es ist bevorzugt, dass der lokale Hochpunkt (17) den höchsten Punkt des Verbindungsmittels (4) darstellt, wobei die üblichen Definitionen von "oben", "unten", "hoch" und "tief" gelten sollen. Demnach weist der lokale Hochpunkt (17) des Verbindungsmittels (4) einen maximalen Abstand zu einem Raumboden beziehungsweise einer Aufstellungsebene der Sorptionskältevorrichtung (8) auf und einen minimalen Abstand zu einem oberen Abschluss der Sorptionskältevorrichtung (8) im Vergleich zu den anderen Punkten des Verbindungsmittels (4). Es kann im Sinne der Erfindung bevorzugt sein, dass der lokale Hochpunkt (17) auch oberhalb des absoluten Hochpunktes der übrigen Sorptionskälteanlage, beispielsweise der Gasfalle, angeordnet vorliegt.

In Figur 6 sind auch die Füllstände (9 und 12) in der Verdampferseite (11) und der Kondensatorseite (10) des Verbindungsmittels (4) dargestellt, sowie eine Auslassleitung (18) im Bereich des Auslasses (13), d.h. dem Endbereich des Verbindungsmittels (4), das in den Verdampfer (1) hineinragt, bevor sich dieser Bereich des Verbindungsmittels (4) zur Querschnittserweiterung (19) ausweitet. Die Querschnittserweiterung (19) kann bevorzugt außerhalb des Verdampfers (1), beziehungsweise möglichst nahe am Hochpunkt (17), beginnen.

Der lokale Hochpunkt (17) auf Verdampferseite (11) des Verbindungsmittels (4) ermöglicht die Erzeugung eines besonders hohen Maximaldrucks, der insbesondere gegenüber dem Höhenunterschied zwischen Kondensatorauslass und Verdampfereinlass erhöht ist. Dies kann beispielsweise dann besonders bevorzugt sein, wenn der Verdampfer (1) nicht oder nicht deutlich oberhalb des Kondensators (3) platziert wird oder wenn aufgrund hoher Umgebungstemperaturen eine große Druckdifferenz zwischen Verdampfer (1) und Kondensator (3) erwünscht ist und damit ein sehr großer Höhenunterschied zwischen Verdampfer (1) und Kondensator (3) benötigt wird.

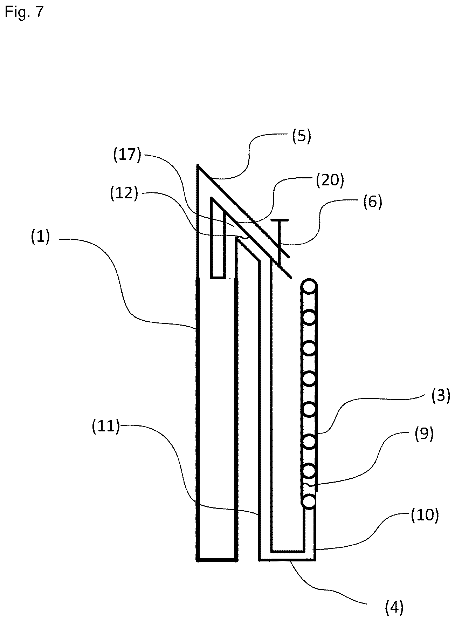

Figur 7 zeigt eine nicht erfindungsgemäße, jedoch für deren Verständnis hilfreiche Ausführungsform der Sorptionskältevorrichtung (8) mit paralleler Führung von Verbindungsmittel (4) und Abzugsrohr (5) aus dem Verdampfer (1) bei gleichzeitiger Ausführung eines lokalen Hochpunktes (17) im Verbindungsmittel (4). Beispielhaft dargestellt ist eine parallele Führung von U-Rohr (4) und Abzugsrohr (5) aus dem Verdampfer (1) und ein Kontaktbereich (20) zwischen dem Abzugsrohr (5) und der Steigleitung (11). Durch diesen Kontaktbereich (20) des U-Rohres (4) kann Wärme vom Kondensat an den Kältemitteldampf übertragen werden. Ebenfalls in Figur 6 sind die Füllstände (9 und 12) in der Verdampferseite (11) und der Kondensatorseite (10) des Verbindungsmittels (4) dargestellt, sowie ein Ventil (6) im Abzugsrohr (5).

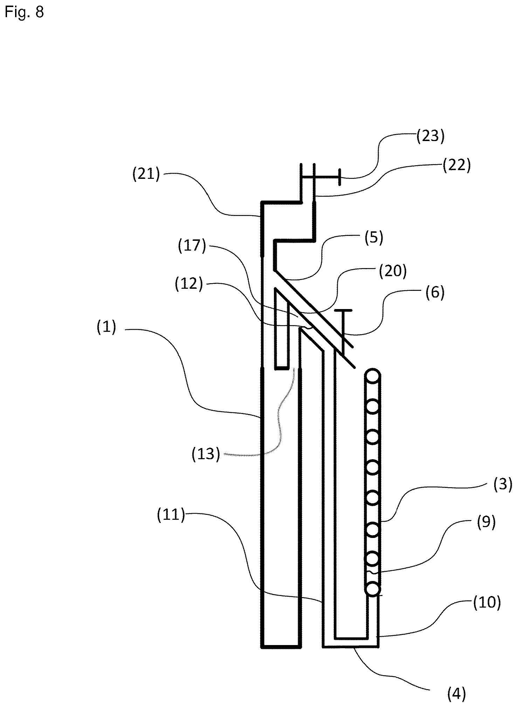

Figur 8 zeigt eine nicht erfindungsgemäße, jedoch für deren Verständnis hilfreiche Ausführungsform der Sorptionskältevorrichtung (8) mit Gasfalle (21), die über dem Verdampfer (1) an einer hochgelegenen Stelle innerhalb der Sorptionskältevorrichtung (8) angeordnet ist. Die Gasfalle (21) kann verwendet werden, um nicht kondensierbare Gase einzufangen und in dem Sammelbehälter, der bevorzugt die Gasfalle (21) bildet, zu sammeln, so dass sie vorteilhafterweise nicht wieder in die Sorptionskammer (2) gelangen, wo sie die ablaufenden Prozesse zur Erzeugung von Kälte stören könnten.

Es ist bevorzugt, dass die Gasfalle (21) an einem bevorzugt höchsten Punkt des Abzugsrohres (5) zwischen Verdampfer (1) und Sorptionskammer (2) angeordnet wird.

Da die nicht kondensierbaren Gase üblicherweise eine geringere Dichte als der Kältemitteldampf haben, steigen diese nach oben und sammeln sich bevorzugt in der Gasfalle (21). Zum Ablassen der nicht kondensierbaren Gase ist an der Oberseite der Gasfalle (21) eine Abzugsleitung (22) vorgesehen, über welche die nicht kondensierbaren Gase zum Beispiel mit einer Vakuumpumpe abgesaugt werden können. Während des normalen Betriebs der Sorptionskältevorrichtung (8) kann die Abzugsleitung (22) über ein vakuumdichtes Ventil (23) verschlossen werden.

### Bezugszeichenliste

- 1: Verdampfer
- 2: Sorptionskammer
- 3: Kondensator
- 4: Verbindungsmittel
- 5: Abzugsrohr
- 6: Ventile
- 7: elektrische Heizung
- 8: Sorptionskältevorrichtung
- 9: Füllstand auf der Kondensatorseite des Verbindungsmittels
- 10: Kondensatorseite des Verbindungsmittels
- 11: Verdampferseite des Verbindungsmittels oder Steigleitung
- 12: Füllstand auf der Verdampferseite des Verbindungsmittels
- 13: Auslass im Verdampfer
- 14: Kondensatreservoir
- 15: Kältemittelreservoir
- 16: Dampfblasen
- 17: lokaler Hochpunkt
- 18: Auslassleitung
- 19: Querschnittserweiterung
- 20: Kontaktbereich
- 21: Gasfalle
- 22: Abzugsleitung
- 23: vakuumdichtes Ventil
- 30: zu kühlender Raum

## Patentansprüche

1. Sorptionskältevorrichtung (8) umfassend mindestens einen Verdampfer (1), einen Kondensator (3) und eine Sorptionskammer (2) wobei ein Austritt aus dem Kondensator (3) durch ein Verbindungsmittel (4) mit einem Eintritt in den Verdampfer (1) verbunden vorliegt, wobei das Verbindungsmittel (4) als Drosseleinrichtung derart ausgebildet ist, dass dessen Abmessungen in Abhängigkeit vom Druckeinsatzbereich während des Betriebs der Sorptionskälteanlage (8) ausgewählt sind, wobei die Länge der Steigleitung (11), also der Verdampferseite des Verbindungsmittels (4), der maximal zu erwartenden Druckdifferenz zwischen Kondensator (3) und Verdampfer (1) im Betrieb entspricht und der Höhenunterschied zwischen dem Auslass aus dem Kondensator (3) und dem Einlass in den Verdampfer (1) der minimalen zu erwartenden Druckdifferenz zwischen Verdampfer (1) und Kondensator (3) im Betrieb entspricht, und wobei zwischen dem Austritt aus dem Kondensator (3) und dem Verbindungsmittel (4) oder in der Kondensatorseite (10) des Verbindungsmittels (4) ein Kondensatreservoir (14) angeordnet ist, wobei der Austritt aus dem Kondensator (3) innerhalb der Sorptionskältevorrichtung (8) tiefer angeordnet ist als der Eintritt in den Verdampfer (1) und strömungstechnisch zwischen dem Austritt aus dem Verdampfer (1) und dem Eintritt in den Kondensator (3) die Sorptionskammer (2) angeordnet vorliegt.

2. Sorptionskältevorrichtung (8) nach Anspruch 1 wobei ein Austritt aus der Sorptionskammer (2) auf oder oberhalb einer Mitte der Sorptionskammer (2) angeordnet vorliegt.

3. Sorptionskältevorrichtung (8) nach einem oder mehreren der vorhergehenden Ansprüche wobei zwischen der Sorptionskammer (2) und dem Kondensator (3) und/oder zwischen dem Verdampfer (1) und der Sorptionskammer (2) mindestens ein Rückschlagventil (6) angeordnet vorliegt, um ausschließlich eine Dampfströmung in Richtung Kondensator zu ermöglichen.

4. Sorptionskältevorrichtung (8) nach einem oder mehreren der vorhergehenden Ansprüche wobei das Verbindungsmittel (4) eine Steigleitung (11) bildet, wobei in der Steigleitung (11) ein Kältemittelreservoir (15) angeordnet vorliegt und/oder das Verbindungsmittel (4) ein U-Rohr ist.

5. Sorptionskältevorrichtung (8) nach einem oder mehreren der vorhergehenden Ansprüche wobei die Steigleitung (11) auf einer Verdampferseite des Verbindungsmittels (4) vollständig oder teilweise innerhalb des zu kühlenden Raums angeordnet vorliegt.

6. Sorptionskältevorrichtung (8) nach einem oder mehreren der vorhergehenden Ansprüche wobei die Steigleitung (11) in direktem thermischen Kontakt mit dem Verdampfer steht.

7. Sorptionskältevorrichtung (8) nach einem oder mehreren der vorhergehenden Ansprüche wobei das Verbindungsmittel (4) einen lokalen Hochpunkt (17) und darauffolgende Querschnittserweiterung (19) umfasst, um den anwendbaren Druckbereich für das Verbindungsmittel nochmals zu erhöhen.

8. Sorptionskältevorrichtung (8) nach einem oder mehreren der vorhergehenden Ansprüche wobei die Sorptionskältevorrichtung (8) ein Abzugsrohr (5) aus dem Verdampfer (1) umfasst, wobei das Abzugsrohr (5) und das Verbindungsmittel (4) zumindest abschnittsweise im Wesentlichen parallel zueinander verlaufen.

9. Sorptionskältevorrichtung (8) nach einem oder mehreren der vorhergehenden Ansprüche wobei die Sorptionskältevorrichtung (8) eine Gasfalle (21) umfasst.

10. Sorptionskältevorrichtung (8) nach einem oder mehreren der vorhergehenden Ansprüche wobei der Kondensator (3) innerhalb der Sorptionskältevorrichtung (8) tiefer angeordnet ist als der Verdampfer (1).

11. Sorptionskältevorrichtung (8) nach einem oder mehreren der vorhergehenden Ansprüche wobei die Sorptionskältevorrichtung (8) ohne Pumpen betreibbar ist.

## Claims

1. A sorption cooling device (8) comprising at least one evaporator (1), a condenser (3), and a sorption chamber (2), wherein an outlet from the condenser (3) is provided connected by a connecting means (4) to an inlet into the evaporator (1), wherein the connecting means (4) is designed as a throttle unit in such a way that its dimensions are selected as a function of the pressure usage range during the operation of the sorption cooling device (8), wherein the length of the riser line (11), thus the evaporator side of the connecting means (4), corresponds to the maximum pressure difference to be expected in operation between condenser (3) and evaporator (1), and the height difference between the outlet from the condenser (3) and the inlet into the evaporator (1) corresponds to the minimum pressure difference to be expected in operation between evaporator (1) and condenser (3), and wherein a condensate reservoir (14) is arranged between the outlet from the condenser (3) and the connecting means (4) or in the condenser side (10) of the connecting means (4), wherein the outlet from the condenser (3) is arranged lower inside the sorption cooling device (8) than the inlet into the evaporator (1), and the sorption chamber (2) is provided arranged fluidically between the outlet from the evaporator (1) and the inlet into the condenser (3).

2. The sorption cooling device (8) according to Claim 1,
wherein an outlet from the sorption chamber (2) is provided arranged at or above a center of the sorption chamber (2).

3. The sorption cooling device (8) according to one or more of the preceding claims,
wherein at least one check valve (6) is provided arranged between the sorption chamber (2) and the condenser (3) and/or between the evaporator (1) and the sorption chamber (2), in order to enable a vapor flow exclusively in the direction of the condenser.

4. The sorption cooling device (8) according to one or more of the preceding claims,
wherein the connecting means (4) forms a riser line (11), wherein a refrigerant reservoir (15) is provided arranged in the riser line (11), and/or the connecting means (4) is a U-pipe.

5. The sorption cooling device (8) according to one or more of the preceding claims,
wherein the riser line (11) is provided arranged on an evaporator side of the connecting means (4) completely or partially within the space to be cooled.

6. The sorption cooling device (8) according to one or more of the preceding claims, wherein the riser line (11) is in direct thermal contact with the evaporator.

7. The sorption cooling device (8) according to one or more of the preceding claims, wherein the connecting means (4) comprises a local high point (17) and following cross-sectional expansion (19), in order to once again increase the applicable pressure range for the connecting means.

8. The sorption cooling device (8) according to one or more of the preceding claims, wherein the sorption cooling device (8) comprises a flue pipe (5) from the evaporator (1), wherein the flue pipe (5) and the connecting means (4) extend essentially in parallel to one another at least in sections.

9. The sorption cooling device (8) according to one or more of the preceding claims, wherein the sorption cooling device (8) comprises a gas trap (21).

10. The sorption cooling device (8) according to one or more of the preceding claims, wherein the condenser (3) is arranged lower than the evaporator (1) within the sorption cooling device (8).

11. The sorption cooling device (8) according to one or more of the preceding claims, wherein the sorption cooling device (8) is operable without pumps.

## Revendications

1. Dispositif de refroidissement à sorption (8) comprenant au moins un évaporateur (1), un condenseur (3) et une chambre de sorption (2)
dans lequel
une sortie du condenseur (3) est reliée par un moyen de liaison (4) à une entrée dans l'évaporateur (1), dans lequel le moyen de liaison (4) est conçu comme un dispositif d'étranglement de sorte que ses dimensions sont choisies en fonction de la plage d'utilisation de la pression pendant le fonctionnement de l'installation de refroidissement à sorption (8), dans lequel la longueur de la conduite montante (11), c'est-à-dire le côté évaporateur du moyen de liaison (4), correspond à la différence de pression maximale à attendre entre le condenseur (3) et l'évaporateur (1) en fonctionnement et la différence de hauteur entre la sortie du condenseur (3) et l'entrée dans l'évaporateur (1) correspond à la différence de pression minimale à attendre entre l'évaporateur (1) et le condenseur (3) en fonctionnement, dans lequel un réservoir de condensat (14) est disposé entre la sortie du condenseur (3) et le moyen de liaison (4) ou du côté condenseur (10) du moyen de liaison (4), dans lequel la sortie du condenseur (3) est disposée plus bas à l'intérieur du dispositif de refroidissement à sorption (8) que l'entrée dans l'évaporateur (1) et la chambre de sorption (2) est disposée, du point de vue de la technique d'écoulement, entre la sortie de l'évaporateur (1) et l'entrée dans le condenseur (3).

2. Dispositif de refroidissement à sorption (8) selon la revendication 1,
dans lequel
une sortie de la chambre de sorption (2) est disposée sur le centre de la chambre de sorption (2) ou au-dessus de celui-ci.

3. Dispositif de refroidissement à sorption (8) selon une ou plusieurs des revendications précédentes,
dans lequel
au moins un clapet anti-retour (6) est disposé entre la chambre de sorption (2) et le condenseur (3) et/ou
entre l'évaporateur (1) et la chambre de sorption (2), afin de permettre exclusivement un écoulement de vapeur en direction du condenseur.

4. Dispositif de refroidissement à sorption (8) selon une ou plusieurs des revendications précédentes,
dans lequel
le moyen de liaison (4) forme une conduite montante (11), dans lequel un réservoir de moyen de refroidissement (15) est disposé dans la conduite montante (11) et/ou le moyen de liaison (4) est un tube en U.

5. Dispositif de refroidissement à sorption (8) selon une ou plusieurs des revendications précédentes,
dans lequel
la conduite montante (11) est disposée sur un côté évaporateur du moyen de liaison (4) entièrement ou partiellement à l'intérieur de l'espace à refroidir.

6. Dispositif de refroidissement à sorption (8) selon une ou plusieurs des revendications précédentes,
dans lequel
la conduite montante (11) est en contact thermique direct avec l'évaporateur.

7. Dispositif de refroidissement à sorption (8) selon une ou plusieurs des revendications précédentes,
dans lequel
le moyen de liaison (4) comprend un point haut local (17) et une extension de section transversale subséquente (19) afin d'augmenter encore la plage de pression applicable pour le moyen de liaison.

8. Dispositif de refroidissement à sorption (8) selon une ou plusieurs des revendications précédentes,
dans lequel
le dispositif de refroidissement par sorption (8) comprend un tuyau d'extraction (5) sortant de l'évaporateur (1), dans lequel le tuyau d'extraction (5) et le moyen de liaison (4) s'étendent sensiblement parallèlement l'un à l'autre, au moins par sections.

9. Dispositif de refroidissement à sorption (8) selon une ou plusieurs des revendications précédentes,
dans lequel
le dispositif de refroidissement par sorption (8) comprend un piège à gaz (21).

10. Dispositif de refroidissement à sorption (8) selon une ou plusieurs des revendications précédentes,
dans lequel
le condenseur (3) est situé plus profondément à l'intérieur du dispositif de refroidissement à sorption (8) que l'évaporateur (1) .

11. Dispositif de refroidissement à sorption (8) selon une ou plusieurs des revendications précédentes,
dans lequel
le dispositif de refroidissement à sorption (8) peut fonctionner sans pompe.
